Europäisches Patentamt

**European Patent Office**

**Office européen des brevets**

(11) Publication number: **0 032 785**
**A2**

# EUROPEAN PATENT APPLICATION

(21) Application number: **81300041.1**

(22) Date of filing: **07.01.81**

(51) Int. Cl.³: **G 02 B 7/26**

(30) Priority: **21.01.80 US 113544**

(43) Date of publication of application: **29.07.81**
Bulletin 81/30

(84) Designated Contracting States: **DE FR GB SE**

(71) Applicant: **THAYER SCHOOL OF ENGINEERING DARTMOUTH COLLEGE, Hanover, New Hampshire 03755 (US)**

(72) Inventor: **Roberts, Harold A., 6 Pleasant Street Apt. 3, North Attleboro Massachusetts 02760 (US)**

(74) Representative: **Pearce, Anthony Richmond et al, Marks & Clerk Alpha Tower ATV Centre, Birmingham B1 1TT (GB)**

(54) **Fiber optic connector.**

(57) A remateable optical fiber connector for two optical fibers (3, 5) comprises an alignment shell (7, 9) for each fiber. Each shell has a bore (11) for receiving one of the fibers which is supported therein by a three rod alignment structure (23). Between the alignment shells is an elastomeric guide (27) which has an hour glass shaped bore (31) that receives the fiber ends. The guide grips the fiber end directly and precisely aligns those fiber ends and prevents relative displacement thereof.

This invention relates to improvements in optical fiber connectors, particularly those connectors which establish a coaxial light-transmitting connection between the ends of two optical fibers.

The use of optical fibers as wave guides for the transmission of light signals is generally well known in the art. Optical transmission systems using optical fibers have the advantages of being immune to electromagnetic noise and providing transmission security. These fibers are of small size, relatively light weight, have a wide signal band width, and prevent cross talk. The expansion in the use of these fiber optics in recent years has largely been the result of the improvements resulting in a reduced amount of attenuation in the transmission of the optical signals. With the problem of attenuation being subject to a practical solution, optical communications systems represent a viable alternative to electrical copper cable systems.

However, a stumbling block in the field of optical fiber communications has been the absence of an inexpensive , low loss connector for the fibers. Such connector must be of the type that precisely lines up the end of one optical fiber with the end of another optical fiber. Precision alignment of the foregoing type is necessary to avoid excessive signal losses.

In accordance with the present invention there is provided an optical fiber connector for establishing a rematable coaxial light-transmitting connection between the ends of two optical fibers, which connector utilizes an elastomeric guide as a centering device which directly grips and precisely aligns the ends of the fibers and thereby snugly retains them in position so as to prevent relative lateral displacement. The connector can accept variations in fiber diameter and at the same time provide a coupling that maintains low signal losses. Typically this connector may align optical fibers to within 4 micrometers resulting in a transmission loss of less than 0.5dB. A further important feature of the connector is its reliability in sealing the coupled joint against contaminants.

Accordingly, the invention comprises an optical fiber connector for establishing a coaxial light-transmitting connection between the ends of two optical fibers comprising an elastomeric guide having an axial bore for receiving the fibers such that an end of each fiber is coaxially juxtaposed with an end of the other fiber in a central region of said axial bore and with one fiber extending from each end of said axial bore, said axial bore having end regions that are larger in diameter than the respective diameters of the fibers, said end regions each tapering towards said central region, and said central region having a diameter that is slightly smaller than each fiber end diameter so that each fiber end slidably engages and slightly expands the diameter of said central region to accommodate said fiber ends, each fiber end being thereby snugly disposed and retained in said central region in said coaxially juxtaposed relationship.

The invention further comprises an alignment shell for each fiber, each shell having a bore for receiving one of the fibers, and means in each bore for supporting the fibers therein. The guide is a unitary member between the shells and in telescopic relation with each.

FIG. 1 is an exploded sectional view of an optical fiber connector constructed in accordance with and embodying the present invention.

FIG. 2 is a longitudinal sectional view of the connector, on an enlarged scale, and

FIG. 3 is a fragmentary sectional view taken along lines 3-3 of FIG. 2.

Referring now in more detail to the drawing there is shown a connector 1 for coupling together a pair of optical fibers 3,5. The fibers 3,5 are of conventional construction and may include a core which is surrounded by cladding which, in turn, is surrounded by a suitable jacketing. The core may be approximately 60 micrometers in diameter and the overall nominal fiber diameter may be approximately 125 micrometers.

The connector 1 includes a pair of cylindrical alignment shells 7,9 of substantially rigid metal or plastic material. The shells have aligned bores 11,11 each of which terminates in an enlarged cylindrical cavity 13,13. The cavity 13,13 opens at an annular end face 15,15 of the respective alignment shells 7,9, the end faces 15,15 each being flat and perpendicular to the central axis of the associated shell. This central axis is the same as the center line of the cylindrical bore 11 and cavity 13. Near its end face 15 the alignment shell 9 has an annular groove 17 for receiving a captive internally threaded nut 19. The nut 19 is adapted to be threaded onto the externally threaded end 21 of the alignment shell 7 when the two shells are secured together, and for purposes presently more fully described.

Rigidly mounted within each bore 11,11 are three aligning rods 23,23,23 of like diameter. The centers of the rods are spaced apart so as to define an equilateral triangle, and the axes of the respective rods are parallel to the central axis of the bore 11. The rods 23 are of a diameter such as to provide a longitudinal interstitial space for receiving one of the optical fibers 3 or 5, as the case may be. The optical fiber 3 or 5 extends into the cavity 13, terminating just short of the end face 15. The rods 23 may occupy the full extent of the bore 11 or they may project a slight amount into the cavity 13. The rods 23 may, however, project away from the alignment shell for a suitable distance so as to support the fiber outwardly of the connector. Furthermore, each fiber 3,5 is adhesively secured in any suitable manner to its associated three rod alignment structure.

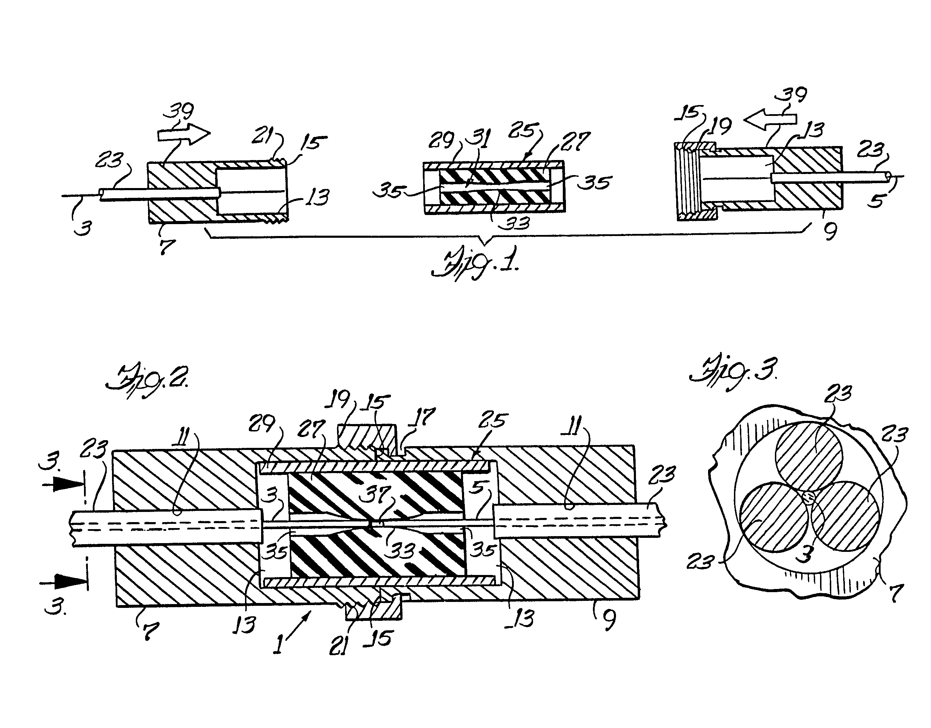

The alignment rod assemblies in the respective shells 7,9 provide preliminary centering of the fibers 3,5 prior to eventual insertion of the free ends of the fibers into a guide structure 25. The guide structure 25 comprises a one piece elastomer guide 27 and a surrounding cylindrical sheath 29 of metal or semi-rigid plastic. The sheath 29 is somewhat longer than the elastomer guide 27 so as to overhang the opposite axial ends of the elastomer guide 27. The outer diameter of the sheath 29 is sized for close fitting telescopic reception within the cavities 13, 13 when the connector components are assembled as shown in FIG. 2.

The guide 27 is a resilient elastomer which can be fabricated from a known elastomeric composition. Preferably a rubber composition is used which is soft and has a low molding viscosity and a low shrinkage during molding. A suitable liquid room temperature vulcanizing rubber (a so-called RTV rubber) is preferably used. One such known material is sold under the trademark Adrub Softee. The guide 27 is molded with a somewhat hour glass shape axial bore 31 having a central region 33 and end regions 35,35. The end regions 35,35 taper toward the central region 33 whereby the end regions 35,35 are of larger diameter than the end of the fibers 3,5 to be positioned therein. However, the central region 33 has a diameter or diameter range which is slightly smaller than the fiber ends so as to provide a direct contact, common alignment surface between the fiber ends, thereby to reduce any transverse displacement between the fiber ends.

The guide 27 may be molded in any known manner utilizing a fracturable core which may be broken to remove the same after the molding operation. Typically the RTV rubber includes a resin and a hardener which are mixed together and then injected into the mold. Curing may be carried out at a 100°F until curing is completed.

In assembling the connector 1, the axial bore of the elastomer 27 has a lubricant injected therein which may also serve as an index matching fluid. The alignment shells with the alignment rods and fibers 3,5 mounted therein are pushed towards each other as shown by arrows 39 in FIG. 1. The alignment shells telescope over the guide structure sheath 29 until the end faces 15,15 are in close proximity whereupon the nut 19 may be turned on the thread 21 to draw the end faces 15,15 up tightly together. During this assembly procedure, the ends of the fibers 3, 5 first enter the end regions 35,35 and then the central region 33. The fiber ends slightly expand the diameter of the central region so as to grip firmly the fiber ends. The gap 37 between the fiber ends will contain the index matching fluid lubricant.

The resilient elastomer of the guide 27 tends to prevent misalignment of the fibers. The resilient material of the guide constantly applies a restoring force to each fiber end proportional to any transverse or angular misalignment. Consequently, the connector is much less susceptible to "creep" than connectors of prior art. Furthermore, there is less likelihood of contamination because the lubricant with which the bore 31 is filled provides a flushing action when the fibers are inserted. The majority of the fluid in the guide is displaced by the fibers with the result that the fluid will move rapidly out of the bore 31 carrying loose contaminants with it. However, once the fibers are inserted the seal at the central region 33 is effectively maintained. The connector is of relatively simple construction and readily capable of disassembly, thus providing a remateable coupling.

CLAIMS:

1.   An optical fiber connector for establishing a coaxial
light-transmitting connection between the ends of two
optical fibers (3, 5) comprising an elastomeric guide (27)
having an axial bore (31) for receiving the fibers such
that an end of each fiber is coaxially juxtaposed with an
end of the other fiber in a central region (33) of said
axial bore and with one fiber extending from each end of
said axial bore, said axial bore having end regions (35,
35) that are larger in size than the respective diameters
of the fibers, said end regions each tapering toward said
central region, characterized in said central region (33)
having a size that is slightly smaller than each fiber end
diameter so that each fiber end slidably engages and
slightly expands the size of said central region to accommodate said fiber ends, each fiber end being thereby
snugly disposed and retained in said central region in
said coaxially juxtaposed relationship.

2.   A connector according to claim 1 in which said elastomeric guide (27) is a unitary member.

3.   A connector according to claim 1 or claim 2 in which
the fiber ends are closely spaced and there is a lubricant
in the space between said ends, said lubricant having the
same index of refraction as that of the optical fibers.

4.   A connector according to claim 1 or claim 2 including
an alignment shell (7, 9) for each fiber, each shell
having a bore (11, 11) for receiving one of the fibers
and said elastomeric guide being interposed between said
shells and in telescopic relation with each.

5.   A connector according to claim 1 or claim 2 including
an alignment shell (7, 9) for receiving each fiber, said guide being telescoped with said shells, three equal diameter rods (23) in each shell for supporting the fiber
therein with the fiber being in the interstitial space
between the rods, said rods being wholly outside of the
central region (33) of said axial bore.

Fig. 1.

Fig. 2.

Fig. 3.

0032785